(19) **Europäisches Patentamt**

**European Patent Office**

**Office européen des brevets**

(11) **EP 1 081 347 B1**

(12) **EUROPEAN PATENT SPECIFICATION**

(45) Date of publication and mention
of the grant of the patent:
**23.04.2003 Bulletin 2003/17**

(51) Int Cl.[7]: **F01N 9/00**, F01N 3/023

(21) Application number: **99117366.7**

(22) Date of filing: **03.09.1999**

(54) **Method to determine the amount of diesel particulate accumulated in a DPF**

Verfahren zur Bestimmung der in einem Dieselabgasfilter anfallenden Partikelmenge

Méthode pour déterminer la quantité des particules accumulée dans un filtre des gaz d' échappement d' un moteur Diesel

(84) Designated Contracting States:
**DE FR GB**

(43) Date of publication of application:
**07.03.2001 Bulletin 2001/10**

(73) Proprietor: **Ford Global Technologies, Inc.,
A subsidiary of Ford Motor Company
Dearborn, Michigan 48126 (US)**

(72) Inventors:
• **Christen, Urs
52072 Aachen (DE)**
• **Vantine, Katie Jo
Ypsilanti, MI 48101 (US)**
• **Carberry, Brendan
52072 Aachen (DE)**

(74) Representative:
**Drömer, Hans-Carsten, Dipl.-Ing. et al
Ford-Werke Aktiengesellschaft,
Patentabteilung NH/DRP,
Henry-Ford-Strasse 1
50725 Köln (DE)**

(56) References cited:
**EP-A- 0 411 445      DE-A- 19 838 032**

• **PATENT ABSTRACTS OF JAPAN vol. 1997, no. 04, 30 April 1997 (1997-04-30) & JP 08 326523 A (ISUZU CERAMICS KENKYUSHO:KK), 10 December 1996 (1996-12-10)**
• **KANDYLAS I P ET AL: "Engine exhaust system design based on heat transfer computation" ENERGY CONVERSION AND MANAGEMENT,GB,ELSEVIER SCIENCE PUBLISHERS, OXFORD, vol. 40, no. 10, July 1999 (1999-07), pages 1057-1072, XP004162444 ISSN: 0196-8904**
• **J.-K. PARK, G.-H. KIM: "Computational Simulation for Regeneration of Wall-Flow Monolith Diesel Particulate Filter Trap" SAE PAPER, no. 9530274, 1995, XP002130307**
• **OTTO JAKUBASCHKE: "Grundagen der Pneumatik", 1978, OTTO KRAUSSKOPF GMBH, MAINZ**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 081 347 B1

**Description**

The invention relates to compression ignition engines particularly to turbo charged compression ignition engines using an exhaust gas recirculation and more particularly to methods to determine the amount of Diesel particulate matter accumulated in a Diesel Particulate Filter (DPF) which is arranged in the exhaust duct which is connected to the exhaust manifold of the engine.

Background

Legislation for vehicle emissions is becoming increasingly stringent. One of the main problems associated with diesel engines is particulate emissions. To date, it has not been possible to reduce them sufficiently by changing engine operating characteristics. The DPF is a possible solution to this problem. As the exhaust gas passes through the DPF, the particulates are trapped in the filter and accumulate over time. This leads to an increased resistance for the flow through the DPF and, therefore, to an increased back pressure on the engine. The increase of back pressure has an adverse effect on engine operation, especially on fuel consumption. In order to reduce back pressure to normal levels, the DPF is regenerated by burning off the accumulated particulates (also referred to as carbon load).

The filter should only be regenerated sparingly, however. First, the filtering efficiency of the DPF increases with increased carbon load. Second, regeneration is only started at sufficiently high exhaust gas temperatures which often are not achieved during normal engine operation. A higher fuel consumption may be involved in initiating regeneration if the exhaust gas temperature is increased artificially. Third, regeneration is most effective when the carbon loading is sufficiently high and homogeneous throughout the filter.

Thus, it is critical to predict the DPF load. Since no sensors are available to directly measure the carbon content in the DPF, the load must be inferred using other signals.

Summary

The invention allows to reconstruct the DPF carbon loading directly, eliminating the need for reference values which depend on enging operating conditions, as is described in the characterizing portion of claim 1.

Prior art

In JP 8326523 A, JP 8158889 A, JP 60090913 A, and JP 59147813 A, the detection of the carbon load is based on the measurements of the pressure before and after the DPF and comparing the ratio of these two pressures to a specified threshold (which obviously must depend on engine operating conditions). Using the pressure drop is disadvantageous since the pressures, which strongly depend on the mass flow through the DPF and the temperature of the exhaust gas entering, the DPF, vary accordingly to the engine operating conditions. Hence, the reference values must depend on the engine operating conditions, as well.

In EP 0 411 445 A2 a method is disclosed to determine the amount of Diesel particulate accumulated in a Diesel particulate filter (DPF) arranged in the exhaust duct of an internal combustion engine for optimising the regeneration intervals. A dimensionless loading parameter L is measured, which is defined as the quotient of the pressure difference $\Delta P$ across the DPF and the volume flow rate $V_T$ to the power of a constant D. In order to determine $\Delta P$, the pressures before and behind the DPF are measured. $V_T$ is determined indirectly with the help of a Venturi tube section behind the DPF and measurements of the pressure behind this tube and the temperature T1 before the DPF.

Detailed description of the invention

**Notation**

| | | |
|---|---|---|
| $A$ | $m^2$ | effective area of the DPF |
| $A_r$ | $m^2$ | effective area of the EGR valve |
| $c_1, c_2$ | – | coefficients |
| $F_i$ | – | burned gas fraction in the intake manifold |
| $F_x$ | – | burned gas fraction in the exhaust manifold |
| $m_i$ | kg | air mass in the intake manifold |
| $l_{DPF}$ | g/l | DPF load |
| $N$ | rpm | engine speed |
| $p_a$ | kPa | ambient pressure |
| $p_b$ | kPa | back pressure downstream of DPF |
| $p_i$ | kPa | intake manifold pressure |
| $p_p$ | kPa | post-turbine pressure |
| $p_r$ | – | pressure ratio $p_r = \max\left(\frac{p_i}{p_x}, \left(\frac{2}{\gamma+1}\right)^{\frac{\gamma}{\gamma-1}}\right)$ |
| $p_x$ | kPa | exhaust manifold (pre-turbine) pressure |
| $R$ | kJ/kg/K | gas constant |
| $\rho_i$ | kg/m$^3$ | density in intake manifold |
| $s$ | – | Laplace variable |
| $T_b$ | K | temperature after DPF |
| $T_{cool}$ | K | coolant temperature |
| $T_{ic}$ | K | temperature downstream of intercooler (air charge temperature) |
| $T_p$ | K | temperature upstream of DPF (post-turbine) |
| $T_r$ | K | temperature downstream of EGR cooler |
| $T_s$ | s | sampling time of low-pass filter |
| $T_x$ | K | exhaust manifold (pre-turbine) temperature |
| $V_d$ | m$^3$ | displacement of the engine |
| $V_i$ | m$^3$ | volume of the intake manifold |
| $W_f$ | kg/s | fuel flow |
| $W_{ci}$ | kg/s | air mass flow (compressor to intake manifold) |
| $W_{DPF}$ | kg/s | mass flow through the DPF |
| $W_{ie}$ | kg/s | mass flow from the intake manifold into the cylinders |
| $W_{xi}$ | kg/s | mass flow through the EGR valve |
| $x_r$ | – | (normalized) EGR valve lift |
| $\gamma$ | – | specific heat ratio |
| $\eta_r$ | – | EGR cooler efficiency |
| $\eta_t$ | – | isentropic efficiency of the turbine |
| $\eta_v$ | – | volumetric efficiency |
| $\tau_{ci}$ | s | time constant of low-pass filter |
| $\Phi_s$ | – | stoichiometric fuel/air ratio |

In order to avoid the use of such reference values the proposed method to determine the amount of Diesel particulate matter accumulated in a DPF arranged in the exhaust duct of an internal combustion engine for optimizing the regeneration intervals includes measurements of the pressure before and after the DPF, of the air mass flow to the engine, of the temperature in front of the DPF and of the fuel flow. Some of these signals are usually measured for the engine control. A functional relation between the particulate load and the effective area of the DPF with experimentally established calibration factors is applied in combination with the valve equation for the subcritical flow regime for the mass flow of the exhaust gas through the DPF.

The effect of the DPF load on the flow through the exhaust pipe can be modeled as a valve which is slowly closing. Since the pressure ratio over the DPF is always close to one:

$$\frac{P_b}{P_p} > \left(\frac{2}{\gamma + 1}\right)^{\frac{\gamma}{\gamma - 1}},\qquad (1)$$

only the subcritical flow regime of the valve equation needs to be taken into account:

$$W_{DPF} = \frac{A(l_{DPF})p_p}{\sqrt{RT_p}}\sqrt{\frac{2\gamma}{\gamma - 1}\left(\left(\frac{p_b}{p_p}\right)^{\frac{2}{\gamma}} - \left(\frac{p_b}{p_p}\right)^{\frac{\gamma+1}{\gamma}}\right)}. \qquad (2)$$

In this equation, $A(l_{DPF})$ is the effective area of the "valve". There are several possibilities for modeling its dependence on the load.

$$l_{DPF} = f(A) \qquad (3')$$

The load is reconstructed by solving equation (2) for the effective area, and substituting this result into equation (3'). Since the DPF load changes very slowly, only steady-state conditions need to be considered. Hence, the flow $W_{DPF}$ through the DPF can be replaced by the air mass flow plus the fuel flow:

$$W_{DPF} = W_{ci} + W_f. \qquad (4)$$

These flows are usually known in the control strategies. The effective area then is given by

$$A(l_{DPF}) = \frac{W_{ci} + W_f}{p_p}\sqrt{RT_p}\left(\frac{2\gamma}{\gamma - 1}\left(\left(\frac{p_b}{p_p}\right)^{\frac{2}{\gamma}} - \left(\frac{p_b}{p_p}\right)^{\frac{\gamma+1}{\gamma}}\right)\right)^{-\frac{1}{2}} \qquad (5)$$

From equation (5) in combination with equation (3') the load can be calculated.

Preferably for the dependence of the effective area $A$ on the load an exponential function is used.

$$A(l_{DPF}) = c_1 e^{-c_2 l_{DPF}} \qquad (3)$$

where the coefficients $c_1$, $c_2$ are identified from experimental data and the load, based on the form proposed in (3), by

$$l_{DPF} = -\ln\left(\frac{A(l_{DPF})}{c_1}\right)/c_2. \tag{6}$$

Obviously, it is important to choose an equation for the effective area which can be solved readily for the load. This criterion would be fulfilled by a linear or quadratic function of the DPF load as well.

Some of the signals needed for load reconstruction can be derived from other measurements instead of being measured directly. This reduces the number of required in-vehicle sensors.

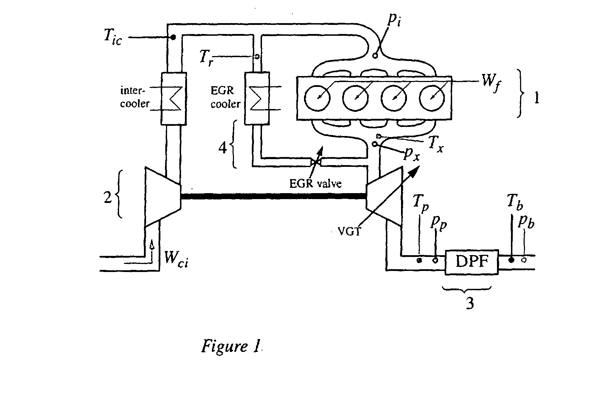

The major components and signals to be measured are shown in Fig. 1. The compression ignition engine 1 is equipped with turbocharger 2, DPF 3. Exhaust gas recirculation 4 and EGR-cooler are arranged between exhaust manifold and intake manifold; an intercooler is placed between compressor and intake manifold. The turbocharger can employ a variable geometry turbine. Several of the signals shown in Fig. 1 are used in the control strategy of the engine and, therefore, are available also for optimizing the regeneration intervals of DPF. The only additional signals which have to be measured are the pressure before the particulate filter and the pressure or, alternatively, the temperature behind the DPF. The temperature of the exhaust gas upstream of the DPF can be measured or reconstructed together with the air mass flow from the compressor to the intake manifold by a model described herein.

If the pressure drop across the exhaust system downstream of the DPF is small compared to the pressure drop across the DPF, the pressure $p_b$ in the equations (2 - 5) can be replaced by the ambient pressure $p_a$. Since the $p_a$ signal is already available in the engine control unit (ECU), one less sensor is required.

Instead of measuring the pressure $p_b$, it could be estimated from the mass flow through the DPF (i.e., $W_{ci}$ + $W_f$) and from the temperature $T_b$ downstream of the DPF. (This temperature signal may also be required in the future for diagnostic purposes). A possible expression for $p_b$ is

$$p_b = p_a + f(W_{ci} + W_f, T_b) \tag{7}$$

where $f(.,.)$ is a polynomial. Its coefficients can be identified from experimental data.

If the pressure $p_x$ and the temperature $T_x$ in the exhaust manifold and the pressure $p_p$ in front of the DPF are measured, the temperature $T_p$ in front of the DPF can be computed from the expansion over the turbine:

$$T_p = T_x\left(1 - \eta_t\left(1 - \left(\frac{p_p}{p_x}\right)^{\frac{\gamma-1}{\gamma}}\right)\right). \tag{8}$$

The isentropic efficiency $\eta_t$ might even be set to one, simplifying the equation considerably.

Further reduction of sensors can be achieved by reconstructing also the air mass flow from the compressor to the intake manifold and the temperature before the DPF.

From the differential equation for the intake manifold pressure $p_i$, either EGR flow $W_{xi}$ or mass air flow $W_{ci}$ can be deduced if the other, the derivative of $p_i$, and the temperatures associated with the various flows are known.

$$\dot{p}_i = \frac{\gamma R}{V_i}(W_{ci}T_{ic} + W_{xi}T_r - W_{ie}T_i) \tag{9}$$

Under the assumption that no MAF measurement is available but that the flow $W_{xi}$ through the EGR valve and its temperature $T_r$ are reconstructed (see below), (9) can be solved for $W_{ci}T_{ic}$:

$$W_{ci}T_{ic} = \frac{V_i}{\gamma R}\dot{p}_i + W_{ie}T_i - W_{xi}T_r. \tag{10}$$

Filtering all the signals by a low-pass filter

$$\frac{1}{\tau_{ci}s + 1}$$

gives

$$(W_{ci}T_{ic})_{filt} = \frac{W_{ci}T_{ic}}{\tau_{ci}s + 1} = \frac{V_i}{\gamma R}\frac{s\,p_i}{\tau_{ci}s + 1} + \frac{W_{ie}T_i - W_{xi}T_r}{\tau_{ci}s + 1} \tag{11}$$

in the frequency domain. Only two of the six signals, $p_i$, $W_{xt}$, $W_{ie}$, $T_r$, $T_i$, and $T_{ic}$, needed to calculate the mass air flow (MAF) are measured, namely intake manifold pressure $p_i$ and the temperature $T_{ic}$ downstream of the intercooler. The other four signals must be estimated.

The flow $W_{ie}$ into the cylinders is described by

$$W_{ie} = \eta_v\rho_i\frac{N}{60}\frac{V_d}{2} = \eta_v\frac{p_i}{RT_i}\frac{N}{60}\frac{V_d}{2}. \tag{12}$$

Hence, the product $W_{ie}T_i$, used in (11), can be computed as

$$W_{ie}T_i = \eta_v\frac{p_2}{R}\frac{N}{60}\frac{V_d}{2}. \tag{13}$$

The volumetric efficiency $\eta_v$ is a function of $p_i$, $p_x$, $T_i$, $T_x$, and N. Engine speed N and exhaust manifold pressure $p_x$ are measured (as is $p_i$) but the two temperatures need to be estimated. The intake manifold temperature $T_i$ is obtained by neglecting the dynamics in (9), i.e., by looking at a steady-state enthalpy balance:

$$T_i = \frac{W_{ci}T_{ic} + W_{xi}T_r}{W_{ie}} = \frac{W_{ci}T_{ic} + W_{xi}T_r}{W_{ci} + T_{xi}}. \tag{14}$$

For the exhaust manifold temperature $T_x$, the mixing dynamics in the exhaust manifold is neglected such that $T_x$ is given by $T_i$ and the temperature rise $\Delta T$,

$$T_x = T_i + \Delta T. \tag{15}$$

$\Delta T$ is a function of $W_f$, N, $T_i$, $F_i$, SOI, and $W_{ie}$.
The mass flow $W_{xi}$ through the EGR valve is described by the orifice flow equation:

$$W_{xi} = \frac{A_r p_x}{\sqrt{RT_x}}\sqrt{\frac{2\gamma}{\gamma - 1}\left(p_r^{\frac{2}{\gamma}} - p_r^{\frac{\gamma+1}{\gamma}}\right)} \tag{16}$$

where

$$p_r = \max\left(\frac{p_i}{p_x}, \left(\frac{2}{\gamma + 1}\right)^{\frac{\gamma}{\gamma-1}}\right) \tag{17}$$

The effective area $A_r$ is mapped as a function of the valve lift $x_r$. The temperature $T_r$ of the flow downstream of the EGR cooler is computed with the equation for heat exchangers:

$$T_r = \eta_r T_{cool} + (1 - \eta_r) T_x \qquad (18)$$

in which the efficiency $\eta_r$ is a function of $W_{xi}$ and N.

By now we have all the signals required for estimating the mass air flow (MAF) except the burned gas fraction $F_i$ in the intake manifold which is used in (15) for $\Delta T$. Neglecting mixing dynamics in the exhaust manifold, the burned gas fraction $F_x$ in the exhaust manifold is given by

$$F_x = \frac{F_i W_{ie} + W_f \left(1 + \frac{1}{\Phi_s}\right)}{W_{ie} + W_f} \qquad (19)$$

where $\Phi_s$ is the stoichiometric fuel/air ratio. With the mass $m_i$ in the intake manifold given by

$$m_i = \frac{p_i V_i}{R T_i}, \, F_i$$

$F_i$ can be computed as

$$\dot{F}_i = \frac{W_{xi}(F_x - F_i) + W_{ci}(F_a - F_i)}{m_i} = \frac{R T_i}{p_i V_i}(W_{xi} F_x - W_{ie} F_i) \qquad (20)$$

since the ambient burned gas fraction $F_a = 0$ and the dynamics of $m_i$ is neglected:

$$\dot{m}_i = 0 = W_{ci} + W_{xi} - W_{ie}.$$

Thus, all the intermediate variables for computing $(W_{ci} T_{ic})$ (11) are now available, and by dividing by $T_{ic}$, the air mass flow is obtained. One of the intermediate signals is the exhaust gas temperature $T_x$ (10) which hence can be used for the computation of the temperature $T_p$ upstream of the DPF:

$$T_p = T_x \left(1 - \eta_t \left(1 - \left(\frac{p_p}{p_x}\right)^{\frac{\gamma-1}{\gamma}}\right)\right). \qquad (8)$$

The estimate of the DPF load as in equation (6) can be further improved in two ways. First, in order to avoid errors associated with transients, the DPF load signal should be filtered with a relatively slow low-pass filter. Second, for very small mass flows through the DPF (e.g., at idle speed), the pressure drop over the DPF is quite small. Since these small pressures cannot be measured accurately enough, the reconstruction of the load is not reliable. Hence, the above mentioned low-pass filter should only be updated when the mass flow exceeds a certain threshold. Alternatively, the filter could be updated with an estimated particulate production rate when the mass flow is too small.

Algorithmically, a discretized version of this low-pass filter computing the filtered load signal $l_{DPF, \text{filt}}$ could be as follows:

$$l_{DPF,filt} = x_{filt}$$
$$\text{if } W_{ci} > W_{ci,threshold} \text{ then}$$
$$\quad x_{filt} = (1 - T_s/\tau)x_{filt} + (T_s/\tau)l_{DPF}$$
$$\text{else}$$
$$\quad x_{filt} = x_{filt} + r_{part}T_s$$
$$\text{end}$$

$$(21)$$

where $T_s$ is the sampling time, r the time constant, $x_{filt}$ the state of the low-pass filter, and $r_{part}$ the particulate production rate.

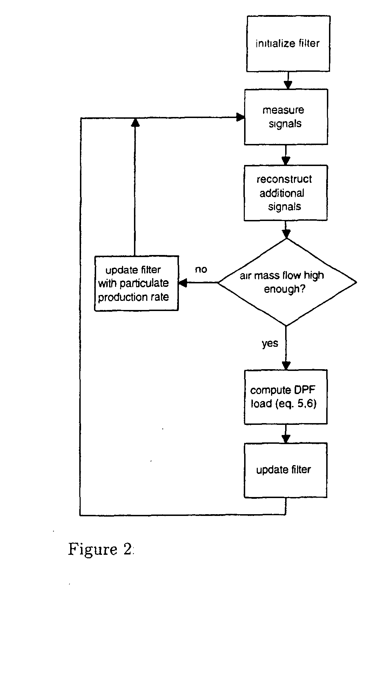

Figure 2 shows a flow chart for the algorithm. For initializing the filter at engine start, the last calculated DPF load can be stored in KAM (keep alive memory). This reduces the time required for the filtered load to converge to the true load after starting the engine.

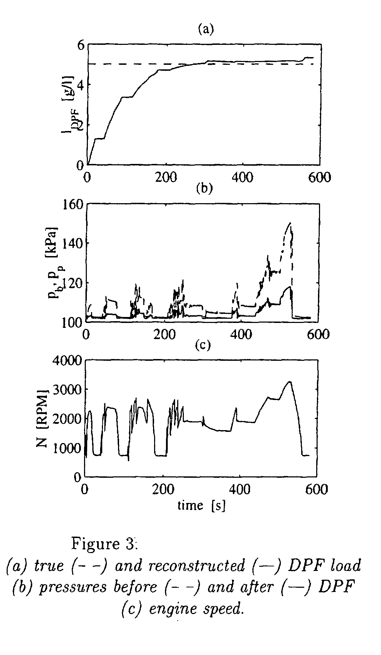

The results of a simulation over the last 580 seconds of the Euro cycle can be seen in Figure 3. The DPF load is reconstructed by using only the pressure signal before and the temperature signal after the DPF; all the other signals are reconstructed. The reconstructed DPF load signal has been filtered with $\tau = 60$ s and has not been updated during idle speed of the engine (a). Due to the large time constant of the filter it takes a while for the filtered DPF load (solid line) which is initialized at zero, to converge to the true load (dashed line).

Plots (b) and (c) show the pressures before (dashed, $p_p$) and after (solid, $p_b$) the DPF and the engine speed N, respectively.

## Claims

1. Method to determine the amount of Diesel particulate matter accumulated in a Diesel Particulate Filter (DPF) arranged in the exhaust duct of an internal combustion engine for optimizing the regeneration intervals including measurements of the pressure before $p_p$ and after $p_b$ the DPF, whereby the air mass flow $W_{ci}$ to the engine and the temperature $T_p$ in front of the DPF is measured,
   **characterized in that**
   also the fuel flow $W_f$ is measured and the valve equation for the subcritical flow regime for the mass flow $W_{DPF} = W_{ci} + W_f$ of the exhaust gas through the DPF (with gas constant R and the specific heat ratio $\gamma$):

$$A(l_{DPF}) = \frac{W_{ci} + W_f}{p_p}\sqrt{RT_{pf}}\left(\frac{2\gamma}{\gamma - 1}\left(\left(\frac{p_b}{p_p}\right)^{\frac{2}{\gamma}} - \left(\frac{p_b}{p_p}\right)^{\frac{\gamma+1}{\gamma}}\right)\right)^{-\frac{1}{2}}$$

   for an effective Area (A) of the DPF which depends on the loading of the DPF is applied and this equation is combined with a functional relationship between the particulate load $l_{DPF}$ and the effective Area (A) of the DPF with experimentally established calibration factors and which functional relationship is inrofible to $l_{DPF} = f(A)$, a function of the effective Area (A).

2. Method according to Claim 1,
   **characterized in in that**
   as functional relation between the particulate load and the effective area of the DPF an exponential function

$$A(l_{DPF}) = c_1 e^{-c_2 l_{DPF}}$$

   with experimentally determined coefficients $c_1$, $c_2$ is applied.

3. Method according to Claim 1,
   **characterized in that**
   as functional relation between the particulate load and the effective area of the DPF a linear function is applied.

**4.** Method according to Claim 1,
**characterized in that**
as functional relation between the particulate load and the effective area of the DPF a quadratic function is applied.

**5.** Method according to one of the Claims 1 to 4,
**characterized in that**
the pressure downstream is replaced by the measured ambient pressure.

**6.** Method according to Claim 5,
**characterized in that**
the temperature behind the DPF is measured and additionally to the replacement of the pressure downstream of the DPF by the ambient pressure a polynomial function

$$p_b = p_a + f(W_{ci} + W_f, T_b).$$

with experimentally determined coefficient for the mass flow through the DPF and for the temperature behind the DPF is applied.

**7.** Method according to one of the Claims 1 to 6,
**characterized in that**
pressure and temperature in the exhaust manifold are measured and **in that** instead of the measured temperature in front of the DPF a calculated temperature

$$T_p = T_x \left( 1 - \eta_t \left( 1 - \left( \frac{p_p}{p_x} \right)^{\frac{\gamma-1}{\gamma}} \right) \right).$$

is used.

**8.** Method according to one of the preceding Claims,
**characterized in that**
the calculated load of the DPF is filtered with a relatively slow low pass filter and this filter is only updated, when the air mass flow from the compressor to the intake manifold exceeds a certain threshold.

**9.** Method according to one or more of Claims 1 to 7,
**characterized in that**
the caculated load of the DPF is filtered with a relatively slow low pass filter and this filter is only updated when the difference between the pressures upstream and downstream of DPF exceeds a certain threshold.

**10.** Method according to Claim 8 or 9,
**characterized in that**
the filter is updated with an estimated particulate production rate, when the air mass flow from the compressor to the intake manifold is lower than the threshold.

**11.** Method according to one or more of Claim 9 to 10,
**characterized in that**
the last calculated load is stored in keep alive memory to initialize the filter start engine start.

**Patentansprüche**

**1.** Verfahren zum Bestimmen der in einem Dieselpartikelfilter (DPF), der im Auspuffrohr eines Verbrennungskraftmotors angeordnet ist, anfallenden Menge an Dieselpartikelmaterial zum Optimieren der Regenerierungsintervalle mit Messungen des Drucks $p_p$ vor und $p_b$ hinter dem DPF, wobei der Luftmassenstrom $W_{ci}$ zum Motor und die Temperatur $T_p$ vor dem DPF gemessen werden, **dadurch gekennzeichnet, dass** auch der Brennstoffstrom $W_f$ gemessen wird und die Ventilgleichung für den unterkritischen Strömungsbereich für den Massenstrom $W_{DPF} = W_{ci} + W_f$ des Abgases durch den DPF (mit der Gaskonstante R und dem spezifischen Wärmeverhältnis $\gamma$) :

$$A(l_{DPF}) = \frac{W_{ci} + W_f}{p_p} \sqrt{RT_p} \left( \frac{2\gamma}{\gamma - 1} \left( \left( \frac{P_b}{P_p} \right)^{\frac{2}{\gamma}} - \left( \frac{P_b}{P_p} \right)^{\frac{\gamma+1}{\gamma}} \right) \right)^{-\frac{1}{2}}$$

für eine effektive Fläche (A) des DPF, die von der Belastung des DPF abhängt, zur Anwendung kommt und dass diese Gleichung mit einer funktionalen Beziehung zwischen der Partikellast $l_{DPF}$ und der effektiven Fläche (A) des DPF mit experimentell ermittelten Kalibrierungsfaktoren kombiniert wird, wobei die funktionale Beziehung nach $l_{DPF} = f(A)$, einer Funktion der effektiven Fläche (A), invertierbar ist.

2. Verfahren nach Anspruch 1, **dadurch gekennzeichnet, dass** als funktionale Beziehung zwischen der Partikellast und der effektiven Fläche des DPF eine Exponentialfunktion

$$A(l_{DPF}) = c_1 e^{-c_2 l_{DPF}}$$

mit experimentell bestimmten Koeffizienten $c_1$, $c_2$ zur Anwendung kommt.

3. Verfahren nach Anspruch 1, **dadurch gekennzeichnet, dass** als funktionale Beziehung zwischen der Partikellast und der effektiven Fläche des DPF eine lineare Funktion zur Anwendung kommt.

4. Verfahren nach Anspruch 1, **dadurch gekennzeichnet, dass** als funktionale Beziehung zwischen der Partikellast und der effektiven Fläche des DPF eine quadratische Funktion zur Anwendung kommt.

5. Verfahren nach einem der Ansprüche 1 bis 4, **dadurch gekennzeichnet, dass** der Druck stromabwärts durch den gemessenen Umgebungsdruck ersetzt wird.

6. Verfahren nach Anspruch 5, **dadurch gekennzeichnet, dass** die Temperatur hinter dem DPF gemessen wird und zusätzlich zu der Ersetzung des Drucks stromabwärts vom DBF durch den Umgebungsdruck eine Polynomfunktion

$$p_b = p_a + f(W_{ci} + W_f, T_b)$$

mit experimentell bestimmten Koeffizienten für den Massenstrom durch den DPF und für die Temperatur hinter dem DPF zur Anwendung kommt.

7. Verfahren nach einem der Ansprüche 1 bis 6, **dadurch gekennzeichnet, dass** Druck und Temperatur in der Abgasleitung gemessen werden und dass anstelle der gemessenen Temperatur vor dem DPF eine berechnete Temperatur

$$T_p = T_x \left( 1 - \eta_t \left( 1 - \left( \frac{P_p}{P_x} \right)^{\frac{\gamma-1}{\gamma}} \right) \right)$$

verwendet wird.

**8.** Verfahren nach einem der vorhergehenden Ansprüche, **dadurch gekennzeichnet, dass** die berechnete Last des DPF mit einem vergleichsweise langsamen Tiefpassfilter gefiltert wird und dieser Filter nur aktualisiert wird, wenn der Luftmassenstrom aus dem Kompressor zum Ansaugrohr einen bestimmten Grenzwert überschreitet.

**9.** Verfahren nach einem oder mehreren der Ansprüche 1 bis 7, **dadurch gekennzeichnet, dass** die berechnete Last des DPF mit einem vergleichsweise langsamen Tiefpassfilter gefiltert wird und dieses Filter nur aktualisiert wird, wenn die Differenz zwischen dem Druck stromaufwärts und dem Druck stromabwärts vom DPF einen bestimmten Grenzwert überschreitet.

**10.** Verfahren nach Anspruch 8 oder 9, **dadurch gekennzeichnet, dass** das Filter mit einer geschätzten Partikelproduktionsrate aktualisiert wird, wenn der Luftmassenstrom aus dem Kompressor zum Ansaugrohr kleiner als der Grenzwert ist.

**11.** Verfahren nach Anspruch 9 oder 10, **dadurch gekennzeichnet, dass** die zuletzt berechnete Last in einer "Keep Alive" gespeichert wird, um MemoryFilter beim Motorstart zu initialisieren.

**Revendications**

**1.** Méthode pour déterminer la quantité de la matière particulaire de diesel accumulée dans un filtre des gaz d'échappement d'un moteur diesel (DPF) arrangé dans le pot d'échappement d'un moteur à combustion interne pour optimiser les intervalles de régénération, comprenant des mesures de la pression avant ($P_p$) et aprés ($P_b$) le DPF dans lequel le débit de masse d'air $W_{ci}$ vers le moteur et la température $T_p$ avant le DPF sont mesurés, **caractérisée en ce que** le débit de combustible $W_f$ est également mesuré, et **en ce que** l'équation de soupape pour le régime de débit sous-critique du débit de masse $W_{DPF} = W_{ci} + W_f$ du gaz d'échappement à travers le DPF (avec la constante des gaz R et le taux de chaleur spécifique $\gamma$) pour une surface utile (A) du DPF qui dépend de la charge du DPF est appliquée, et **en ce que** cette équation est combinée avec une relation fonctionnelle entre la charge particulaire $L_{DPF}$ et la surface utile (A) du DPF avec des facteurs de calibrage déterminés expérimentalement, ladite relation fonctionnelle étant évolutive en $L_{DPF} = f(A)$, une fonction de la surface utile (A).

$$A\left(l_{DPF}\right) = \frac{W_{ci} + W_f}{p_p} \sqrt{RT_p} \left( \frac{2\gamma}{\gamma - 1} \left( \left(\frac{p_b}{p_P}\right)^{\frac{2}{\gamma}} - \left(\frac{p_b}{p_P}\right)^{\frac{\gamma + 1}{\gamma}} \right) \right)^{\frac{-1}{2}}$$

**2.** Méthode suivant la revendication 1, **caractérisée en ce que**, comme relation fonctionnelle entre la charge particulaire et la surface utile du DPF, on applique une fonction exponentielle

$$A(l_{DPF}) = c_1 e^{-c_2 l_{DPF}}$$

avec des coefficients déterminés expérimentalement $c_1$, $c_2$.

**3.** Méthode suivant la revendication 1, **caractérisée en ce que**, comme relation fonctionnelle entre la charge particulaire et la surface utile du DPF, on applique une fonction linéaire.

**4.** Méthode suivant la revendication 1, **caractérisée en ce que**, comme relation fonctionnelle entre la charge particulaire et la surface utile du DPF, on applique une fonction quadratique.

**5.** Méthode suivant l'une quelconque des revendications 1 à 4, **caractérisée en ce que** la pression en aval est remplacée par la pression ambiante mesurée.

**6.** Méthode suivant la revendication 5, **caractérisée en ce que** l'on mesure la température derrière le DPF, et **en ce qu'**en plus du remplacement de la pression en aval du DPF par la pression ambiante, on applique une fonction polynomiale

$$p_b = p_a + f(W_{ci} + W_f, T_b)$$

avec des coefficients déterminés expérimentalement pour le débit de masse à travers le DPF et pour la température derrière le DPF.

7. Méthode suivant l'une quelconque des revendications 1 à 6, **caractérisée en ce que** l'on mesure la pression et la température dans le collecteur d'échappement, et **en ce qu'**à la place de la température mesurée avant le DPF, on utilise une température calculée

$$T_p = T_x \left( 1 - \eta_t \left( 1 - \left( \frac{p_p}{p_x} \right)^{\frac{\gamma - 1}{\gamma}} \right) \right).$$

8. Méthode suivant l'une quelconque des revendications précédentes, **caractérisée en ce que** la charge calculée du DPF est filtrée avec un filtre passe-bas relativement lent, et ce filtre est seulement réinitialisé lorsque le débit de masse d'air allant du compresseur au collecteur d'entrée dépasse un certain seuil.

9. Méthode suivant une ou plusieurs des revendications 1 à 7, **caractérisée en ce que** la charge calculée du DPF est filtrée avec un filtre passe-bas relativement lent, et ce filtre est seulement réinitialisé lorsque la différence entre la pression en amont et la pression en aval du DPF dépasse un certain seuil.

10. Méthode suivant la revendication 8 ou 9, **caractérisée en ce que** le filtre est réinitialisé avec une vitesse de production de particules estimée, lorsque le débit de masse d'air allant du compresseur au collecteur d'entrée est inférieur à un certain seuil.

11. Méthode suivant une ou plusieurs des revendications 9 à 10, **caractérisée en ce que** la dernière charge calculée est stockée dans une mémoire vive de stockage afin d'initialiser le lancement du moteur du filtre.

*Figure 1*

Figure 2.

Figure 3:
(a) true (- -) and reconstructed (—) DPF load
(b) pressures before (- -) and after (—) DPF
(c) engine speed.